# EUROPÄISCHE PATENTANMELDUNG

(11) **EP 0 949 135 A2**
(43) Veröffentlichungstag der Anmeldung: **13.10.1999**
(21) Anmeldenummer: 99106930.3
(22) Anmeldetag: 08.04.1999
(51) Int. Cl.: B62B 3/06

(54) **Gabelhubwagen**

(30) Priorität: 09.04.1998 DE 29806537 U
(71) Anmelder: Borrmann, Michaela, 47574 Goch-Kessel (DE)
(72) Erfinder: Borrmann, Hans-Peter, 47574 Goch-Nierswalde (DE)
(74) Vertreter: Funken, Josef, Dipl.-Ing.

(57) **Zusammenfassung**

Bei einem Gabelhubwagen mit zwei gleichen Lasthebern in einer gemeinsamen Horizontalebene parallel zueinander zum Heben, Fahren und Absenken von Paletten, wobei jeder Lastenheber einen horizontal angeordneten Aufnahmeträger aufweist, in dessen hinterem Bereich und an dessen vorderem Ende je ein mit dem Aufnahmeträger schwenkbeweglich verbundener Schwenkhebel vorgesehen ist, wobei desweiteren die beiden Schwenkhebel mit Abstand unterhalb des Aufnahmeträgers mit einer Parallelogrammführungsstange gelenkig verbunden und im unteren Bereich des hinteren Schwenkhebels zwei Laufrollen angeordnet sowie an den vorderen Schwenkhebeln zwei Betätigungseinrichtungen zur Vertikalverschwenkung der Schwenkhebel vorgesehen sind und auf den beiden Betätigungsvorrichtungen ein Lenkkopf mit zwei Lenkrädern aufgesetzt und gegen Herausfallen gesichert ist, wobei darüber hinaus der Lenkkopf eine etwa mittig am Lenkkopf angeordnete Zug- und Schubkupplung und eine seitlich am Lenkkopf in der Projektion etwa senkrecht zu der Zug- und Schubkupplung angeordnete Drehkupplung aufweist und eine Betätigungsstange vorgesehen ist und wobei schließlich zwischen dem Aufnahmeträger und der Parallelogrammführungsstange ein einseitig wirkendes Schubkolbengetriebe schrägliegend angeordnet ist, ist vorgesehen,
daß das Schubkolbengetriebe als ein solcher einseitig wirkender Dämpfer ausgebildet ist, der nur beim Absenken des Gabelhubwagens eine Dämpfungskraft entwickelt, nicht hingegen beim Anheben des Gabelhubwagens.

## Beschreibung

Die Erfindung betrifft einen Gabelhubwagen mit zwei gleichen Lasthebern in einer gemeinsamen Horizontalebene parallel zueinander zum Heben, Fahren und Absenken von Paletten, wobei jeder Lastenheber einen horizontal angeordneten Aufnahmeträger aufweist, in dessen hinterem Bereich und an dessen vorderem Ende je ein mit dem Aufnahmeträger schwenkbeweglich verbundener Schwenkhebel vorgesehen ist, wobei desweiteren die beiden Schwenkhebel mit Abstand unterhalb des Aufnahmeträgers mit einer Parallelogrammführungsstange gelenkig verbunden und im unteren Bereich des hinteren Schwenkhebels zwei Laufrollen angeordnet sowie an den vorderen Schwenkhebeln zwei Betätigungseinrichtungen zur Vertikalverschwenkung der Schwenkhebel vorgesehen sind und auf den beiden Betätigungsvorrichtungen ein Lenkkopf mit zwei Lenkrädern aufgesetzt und gegen Herausfallen gesichert ist, wobei darüber hinaus der Lenkkopf eine etwa mittig am Lenkkopf angeordnete Zug- und Schubkupplung und eine seitlich am Lenkkopf in der Projektion etwa senkrecht zu der Zug- und Schubkupplung angeordnete Drehkupplung aufweist und eine Betätigungsstange vorgesehen ist und wobei schließlich zwischen dem Aufnahmeträger und der Prallelogrammführungsstange ein einseitig wirkendes Schubkolbengetriebe schrägliegend angeordnet ist.

Es ist ein tragbarer Lastenheber für Paletten und dergleichen bekannt, der einen heb- und senkbaren Lastaufnahmeträger aufweist und an dem im Abstand zueinander in Anschlußgelenken vertikal schwenkbar angeordnete, mit Laufrollen versehene und aus Schwenkhebeln bestehende Rollenträger vorgesehen sind und der mit einer Betätigungsvorrichtung zur Vertikalverschwenkung der Rollenträger versehen ist. Dabei sind die Rollenträger über ein an der Unterseite des Lastaufnahmeträgers angeordnetes, gelenkig angeschlossenes Koppelglied zur Synchronverschwenkung zwangsgekoppelt. Hierbei ist die Zwangskoppelung so ausgebildet, daß der Lastaufnahmeträger, die beiden Rollenträger und das mit den Rollenträgern jeweils über ein Koppelgelenk verbundene Koppelglied ein Parallelogramm-Gelenkviereck bilden.

Dadurch ist zwar sichergestellt, daß der Lastaufnahmeträger immer parallel zu dem Boden, auf dem er steht, gehoben und gesenkt wird, jedoch ist dieser bekannte Lastenheber nicht lenkbar, was in beengten Räumlichkeiten, wie man sie in bereits teilweise beladenen Lastwagen vorfindet, einen Nachteil darstellt.

Außerdem ist ein Hubwagen mit einer hydraulischen Hubvorrichtung bekannt, durch die der Hubwagen in beliebige Zwischenstellungen zwischen der untersten und der obersten Stellung gebracht werden kann. Aus diesem Grunde ist der bekannte Hubwagen konstruktiv und baulich sehr aufwendig und außerdem sehr schwer.

Des weiteren ist es bekannt, daß zwischen dem Aufnahmeträger und der Parallelogrammführungsstange ein einseitig wirkender Öldruckzylinder schrägliegend angeordnet ist. Dadurch ist ein sanftes Absenken des Gabelhubwagens sichergestellt, ohne daß an der Betätigungsstange die entsprechende vergleichsweise große Kraft aufgewendet werden muß.

Beim Absenken von Lasten mit einem Gewicht von mehr als 500 Kilogramm besteht nicht die unerwünschte Möglichkeit, daß sich der Gabelhubwagen im Zuge des Absenkens der Last plötzlich und schlagartig in die abgesenkte Stellung bewegt, wenn die Betätigungsstange nicht mit der genügenden Kraft seitens der Betätigungsperson festgehalten wird.

Der bekannte Öldruckzylinder bremst nicht nur die Absenkbewegung des Gabelhubwagens sondern in gleicher Weise auch dessen Hebebewegung. Die beim Heben des Gabelhubwagens entstehende entgegenwirkende Kraft des Öldruckzylinders muß von der Betätigungsperson überwunden werden. Außerdem ist der Öldruckzylinder aufwendig, teuer und platzraubend.

Der Erfindung liegt die Aufgabe zugrunde, einen Gabelhubwagen der einleitend genannten Art dahingehend zu verbessern, daß beim Anheben der Last der Hebebewegung keine Kraft des Schubkolbengetriebes entgegensteht sondern nur beim Absenken der Last.

Diese Aufgabe wird dadurch gelöst, daß das Schubkolbengetriebe als ein solcher einseitig wirkender Dämpfer ausgebildet ist, der nur beim Absenken des Gabelhubwagens eine Dämpfungskraft entwikkelt, nicht hingegen beim Anheben des Gabelhubwagens.

Auf diese Weise gelangt man zu einem Gabelhubwagen der einleitend genannten Art, bei dem die Absenkbewegung gedämpft, jedoch die Hebebewegung ungedämpft ist. Der hydraulische Dämpfer bzw. Dämpfungszylinder kann eine hohe Kraft über einen längeren Weg langsam und kontrolliert bewegen sowie einen plötzlichen Kraftstoß auffangen.

In weiterer Ausgestaltung der Erfindung kann der Dämpfer als hydraulischer Dämpfungszylinder ausgebildet sein.

Zweckmäßig sind im Kolben des Dämpfungszylinders Längsbohrungen vorgesehen.

Des weiteren empfiehlt es sich, daß in den Bohrungen oder in einem Teil der Bohrungen des Kolbens Kugeln vorgesehen sind, die beim Ausfahren der Kolbenstange die Bohrungen freigeben und diese Bohrungen beim Einfahren der Kolbenstange verschließen.

Außerdem handelt es sich bei einem solchen Zylinder um einen serienmäßig gefertigten Zylinder, der mithin preisgünstig, unaufwendig und platzsparend ist. Er verursacht über den gesamten Weg einen hohen Dämpfungsdruck beim Einfahren der Kolbenstange, während abgesehen von der Überwindung von Reibungskräften kein weiterer Kraftaufwand beim Ausziehen der Kolbenstange bzw. beim Anheben des Gabelhubwagens entsteht.

In dem Zylindergehäuse ist ein Kolben mit einer Kolbenstange längsbeweglich angeordnet, der gegen das Zylindergehäuse abgedichtet ist. Im Kolben befinden sich Längsbohrungen. Beim Auseinanderziehen des Dämpfers fließt das Öl in den gegenüberliegenden Hohlraum. Ein Teil der Bohrungen ist mit Kugeln versehen, die beim Ausfahren der Kolbenstange die Bohrungen freigeben, diese aber beim Einfahren der Kolbenstange entsprechend dem gewünschten Dämpfungsdruck einen Teil der Bohrungen verschließen, so daß eine Verlangsamung der Einfahrgeschwindigkeit des Dämpfers entsteht.

Der erfindungsgemäße Gabelhubwagen ist klein, wendig und handlich, gleichzeitig aber auch leistungsfähig und universell einsetzbar. Bei diesem Gabelhubwagen handelt es sich um ein kompaktes Transportgerät mit geringem Eigengewicht von etwa 30 kg, großer Wendigkeit und Tragkraft bis zu 750 kg zum Be- und Entladen von LKW sowie für innerbetriebliche Aufgabenstellungen bei sehr geringem Platzbedarf.

Das geringe Eigengewicht und der geringe Platzbedarf machen es möglich, daß der erfindungsgemäß ausgebildete Gabelhubwagen auf jeder Ladefläche, im Fahrerhaus eines LKW oder im Kofferraum eines PKW mitgeführt werden kann. Der Gabelhubwagen ist wartungsfrei, robust sowie leicht lenkbar und handlich. Mit diesem Gabelhubwagen lassen sich Güter auf kleinstem Raum mühelos sicher anheben, absenken, transportieren und drehen. Optimale Einsatzmöglichkeiten bestehen beim Be- und Entladen von Kleintransportern, aber auch großen Lastkraftwagen, angefangen vom Rangieren auf der Ladefläche bis zum Transport auf dem Weg zu der Warenannahme oder den Lagerräumen. Mit nur 30 kg Eigengewicht und einer Tragkraft von 750 kg hat der erfindungsgemäße Gabelhubwagen eine hohe Leistung.

Die Erfindung wird nachfolgend anhand eines in der Zeichnung dargestellten Ausführungsbeispieles des näheren erläutert. Es zeigt
- Fig. 1: eine perspektivische Darstellung des Gabelhubwagens,
- Fig. 2: eine Ansicht in Richtung des Pfeiles II der Figur 1 auf den Gabelhubwagen in abgesenkter Stellung des Gabelhubwagens,
- Fig. 3: eine der Figur 2 entsprechende Ansicht, jedoch in angehobener Stellung des Gabelhubwagens,
- Fig. 4: den vorderen Teil des Gabelhubwagens in abgesenkter Stellung ohne Lenkkopf,
- Fig. 5: eine der Figur 4 entsprechende Darstellung, jedoch in angehobener Stellung des Gabelhubwagens und mit Lenkkopf,
- Fig. 6: eine Vorderansicht in Richtung der Pfeile VI der Figuren 2 und 3,
- Fig. 7: eine vergrößerte Darstellung des Bereiches VII der Figur 3 und
- Fig. 8: einen Längsschnitt durch einen Dämpfer.

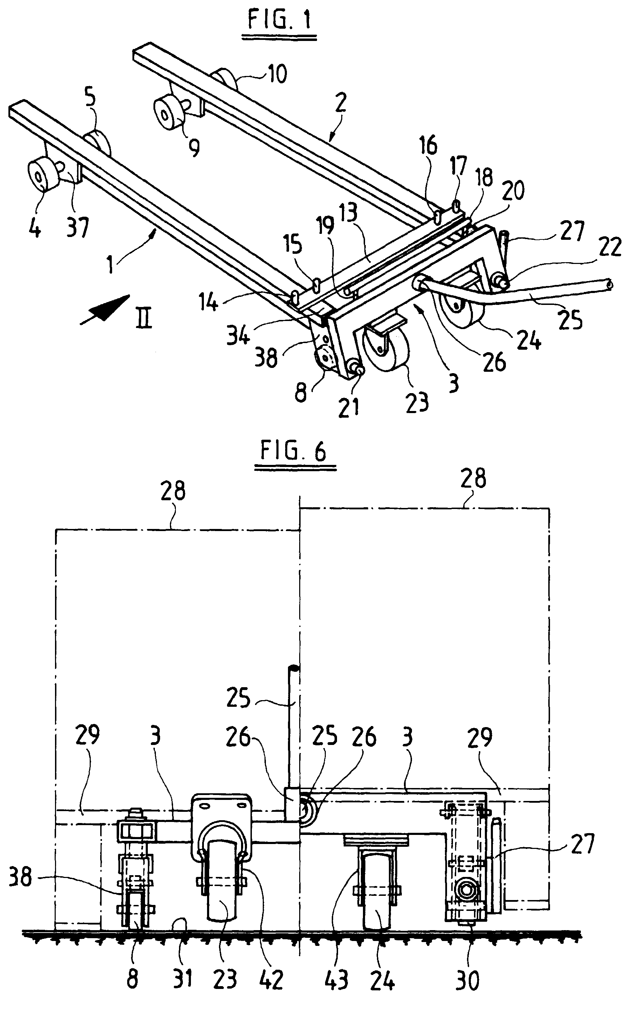

Der in Figur 1 dargestellte Gabelhubwagen hat zwei Lastenheber 1,2, die an ihren beiden vorderen Enden mit einem Lenkkopf 3 verbunden sind. Der Lastenheber 1 hat an seinem hinteren Ende zwei Laufrollen 4,5 und an seinem vorderen Ende eine Stützrolle 8. Desgleichen hat der Lastenheber 2 an seinem hinteren Ende zwei Laufrollen 9,10 und an seinem vorderen Ende eine Stützrolle 30.

In der Nähe des vorderen Endes des Lastenhebers 1 und des vorderen Endes des Lastenhebers 2 ist eine Verbindungslasche 13 vorgesehen, die auf Stifte 14,15 des Lastenhebers 1 und auf Stifte 16,17 des Lastenhebers 2 gesteckt ist. Hierdurch ist sichergestellt, daß die beiden Lastenheber 1,2 ständig parallel zueinander gehalten sind.

An der hinteren Seite des Lenkkopfes 3 ist ein Verbindungsstab 18 vorgesehen, an dem Entriegelungsstifte 19,20 angebracht sind. Der Lenkkopf 3 ist auf mit den Lastenhebern 1,2 verbundene Bolzen 21,22 aufgesetzt. An dem Lenkkopf 3 sind Lenkräder 23,24 angeordnet, die um eine senkrechte Achse drehbar gelagert sind.

Etwa mittig am Lenkkopf 3 ist eine Zug- und Schubstange 25 in einer Zug- und Schubkupplung 26 vorgesehen. Darüberhinaus ist seitlich am Lenkkopf 3 eine Drehkupplung mit einem Stift 27 vorgesehen, mit dem die Zug- und Schubstange 25 ebenfalls verbunden werden kann.

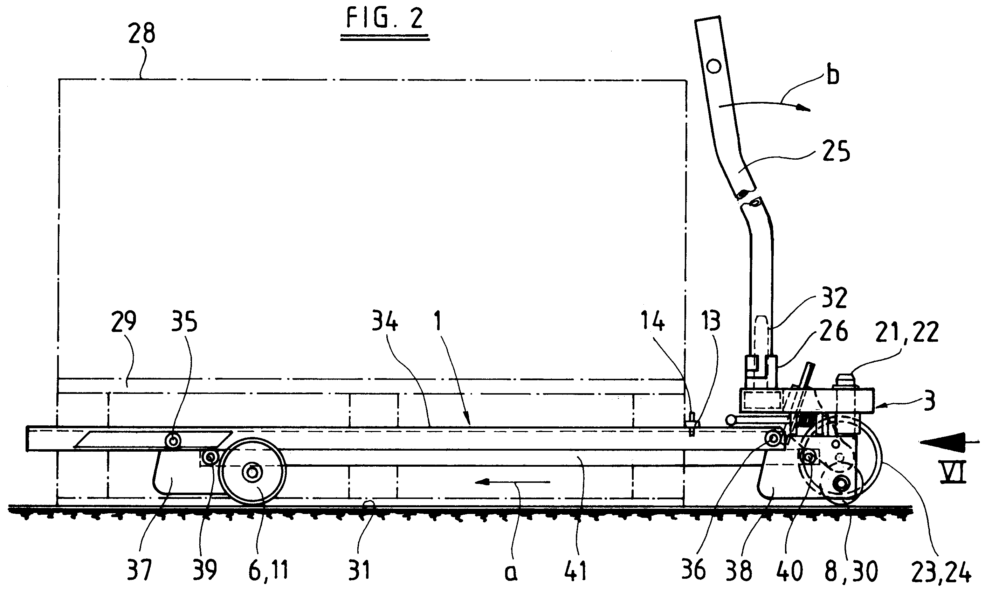

Gemäß der Darstellung in Figur 2 ist der Gabelhubwagen in abgesenkter Stellung in Richtung des Pfeiles a unter eine mit einer Last 28 beladene Palette 29 gefahren. Dabei stehen die Laufrollen 4,5,9,10 und die Stützrollen 8,30 auf dem Boden 31. Die Zug- und Schubstange 25 steckt auf dem Adapterbolzen 32 sowie in der Zug- und Schubkupplung 26 und ist nach oben gerichtet.

Der Lastenheber 1 hat einen Aufnahmeträger 34, an dem in horizontalen Querbolzen 35,36 Schwenkhebel 37,38 schwenkbeweglich gelagert sind. In weiteren horizontalen Querbolzen 39,40 ist eine Parallelogrammführungsstange 41 gelenkig an den Schwenkhebeln 37,38 gelagert, so daß der Aufnahmeträger 34 sowie die Schwenkhebel 37,38 und die Parallelogrammführungsstange 41 ein Parallelogramm-Viergelenk bilden. An den beiden vorderen Schwenkhebeln 38 sind zwei Bolzen 21,22 vorgesehen, auf die der Lenkkopf 3 mit passenden Bohrungen 51 aufgesetzt ist.

An der unteren Seite des Lenkkopfes 3 sind die Lenkrollen 23,24 in Rollengabeln 42,43 gelagert, wobei die Rollengabeln 42,43 am Lenkkopf 3 ihrerseits drehbar gelagert sind.

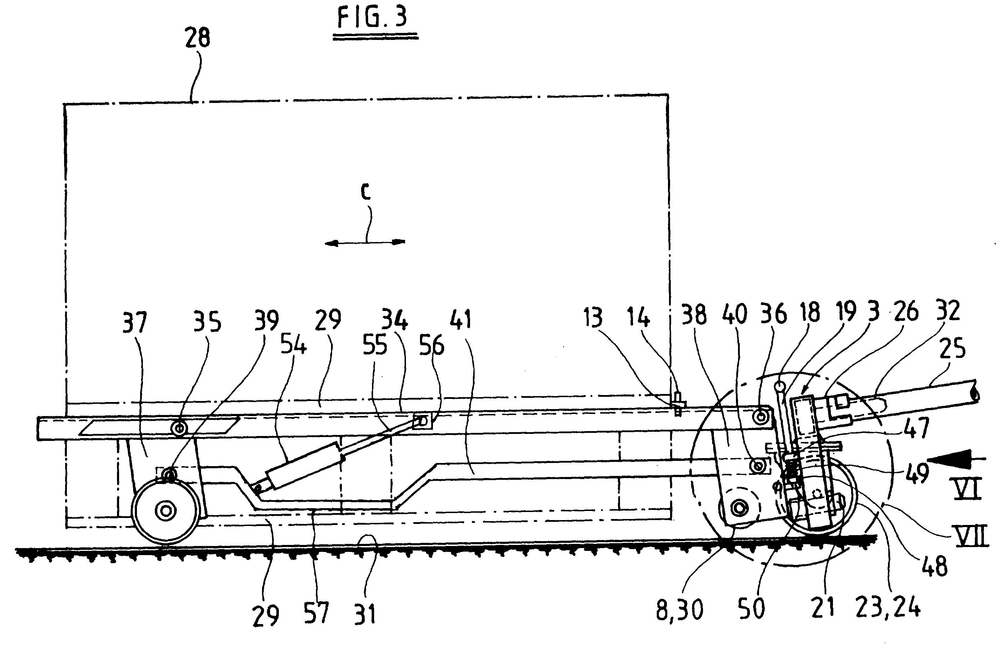

Zum Anheben der Palette 29 oberhalb des Gabelwagens wird die Zug- und Schubstange 25 in Richtung des Pfeiles b so weit geschwenkt, bis sie die in Figur 3 dargestellte Lage einnimmt. Bei dieser Schwenkbewegung der Schubstange 25 wird auch der Lenkkopf 3 um den gleichen Winkel rechtsherum gedreht, bis er die in Figur 3 dargestellte Lage einnimmt. Um den gleichen Winkel werden auch die Schwenkhebel 37,38 rechtsherum geschwenkt. Dadurch werden die Parallelogrammführungsstange 41 und der Aufnahmeträger 34 soweit angehoben, daß die Palette 29 Bodenfreiheit gewinnt und gefahren werden kann. In diesem angehobenen Zustand des Gabelhubwagens kann dieser über die Schubstange 25 und die um eine senkrechte Achse drehbaren Lenkräder 23,24 in Richtung des Doppelpfeiles c nach vorn und hinten gefahren und gelenkt werden.

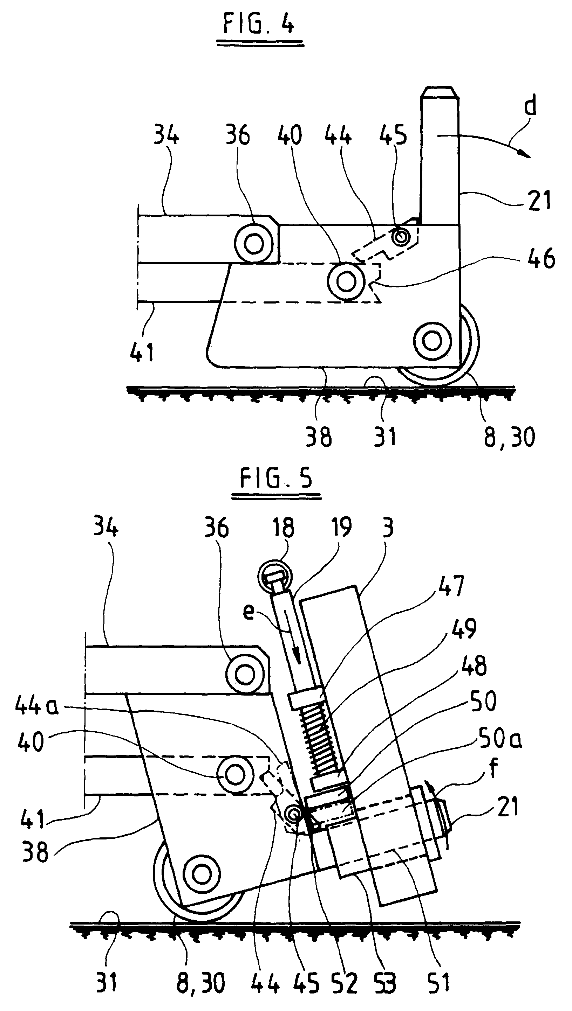

Wie sich insbesondere aus Figur 4 und Figur 5 ergibt, ist an dem Schwenkhebel 38 ein Querbolzen 45 vorgesehen, auf dem eine Sicherungsklinke 44 schwenkbeweglich gelagert ist. Am vorderen Ende der Parallelogrammführungsstange 41 ist ein Sicherungsanschlag 46 vorgesehen. In der in Figur 4 dargestellten abgesenkten Lage des Lastenhebers liegt das freie Ende der Sicherungsklinke 44 auf der Parallelogrammführungsstange 41 auf. Der Bolzen 21 steht etwa senkrecht nach oben, während der Schwenkhebel 38 etwa horizontal ausgerichtet ist.

Beim Schwenken des Bolzens 21 in Richtung des Pfeiles d, entsprechend dem Schwenken der Schubstange 25 in Richtung des Pfeiles b werden die Querbolzen 36,40 mit Bezug auf die Darstellung in Figur 4 und Figur 5 schräg nach oben rechts verschoben. Dadurch werden die Parallelogrammführungsstange 41 und der Aufnahmeträger 34 in die in Figur 5 dargestellte angehobene Position nach oben gehoben, wodurch die Palette 29 ebenfalls entsprechend angehoben wird. In dem angehobenen Zustand lagert die Sicherungsklinke 44 gegen den Sicherungsanschlag 46, so daß dadurch der Gabelhubwagen in der angehobenen Position gesichert ist.

Um den Gabelhubwagen aus der angehobenen Position wieder abzusenken, wird der Entriegelungsstift 19 in Richtung des Pfeiles e soweit nach unten geschoben, bis die Entriegelungsnase 50 die Position 50a eingenommen hat. Bei dieser Bewegung stößt die Kante 52 des Entriegelungsstiftes 19 gegen die vordere Fläche der Sicherungsklinke 44 und schwenkt die Sicherungsklinke 44 im Uhrzeigersinn in die Position 44a. In dieser Lage 44a der Sicherungsklinke 44 kann der Bolzen 21 in Richtung des Pfeiles f wieder nach oben geschwenkt werden, wodurch die Lagerbolzen 36,40 schräg nach vorn unten bewegt werden, so daß der Lastenheber wieder die in Figur 4 dargestellte Position erreicht.

Der Schwenkkopf 3 ist mit zwei Führungsbuchsen 53 zur Aufnahme der Bolzen 21,22 versehen, wodurch die parallele Ausrichtung der Lastenheber 1,2 zueinander gesichert wird.

Der Entriegelungsstift 19 ist in Führungsböcken 47 und 48 axial geführt, wobei zwischen den Führungsböcken 47,48 der Entriegelungsstift 19 mit einer Rückstellfeder 49 belastet ist, damit der Entriegelungsstift 19 nach jeder Betätigung in seine Ausgangsposition zurückkehrt. Am unteren Ende des Entriegelungsstiftes 19 ist eine Entriegelungsnase 50 vorgesehen, mit der die Sicherungsklinke 44 aus der Arretierungsstellung entriegelt werden kann, wenn der Entriegelungsstift 19 in Richtung des Pfeiles e nach unten bewegt wird.

Um in jedem Falle ein sanftes Absenken des Gabelhubwagens sicherzustellen, ohne daß an der Betätigungsstange 25 eine entsprechend große Kraft aufgewendet werden muß, ist gemäß der in Figur 3 gestrichelten Darstellung ein Öldruckzylinder 54 vorgesehen, dessen Kolbenstange 55 in einem Lager 56 des Aufnahmeträgers 34 gelenkig gelagert ist und dessen Zylinder in einem nach unten abgebogenen Bereich 57 der Parallelogrammführungsstange 41 ebenfalls gelenkig gelagert ist. Im angehobenen Zustand des Gabelhubwagens ist der Öldruckzylinder 54 schräg zwischen dem Aufnahmeträger 34 und der Parallelogrammführungsstange 41 angeordnet, während er im abgesenkten Zustand des Gabelhubwagens mit eingefahrener Kolbenstange 55 in dem abgebogenen Bereich 57 der Parallelogrammführungsstange 41 nahezu horizontal liegt.

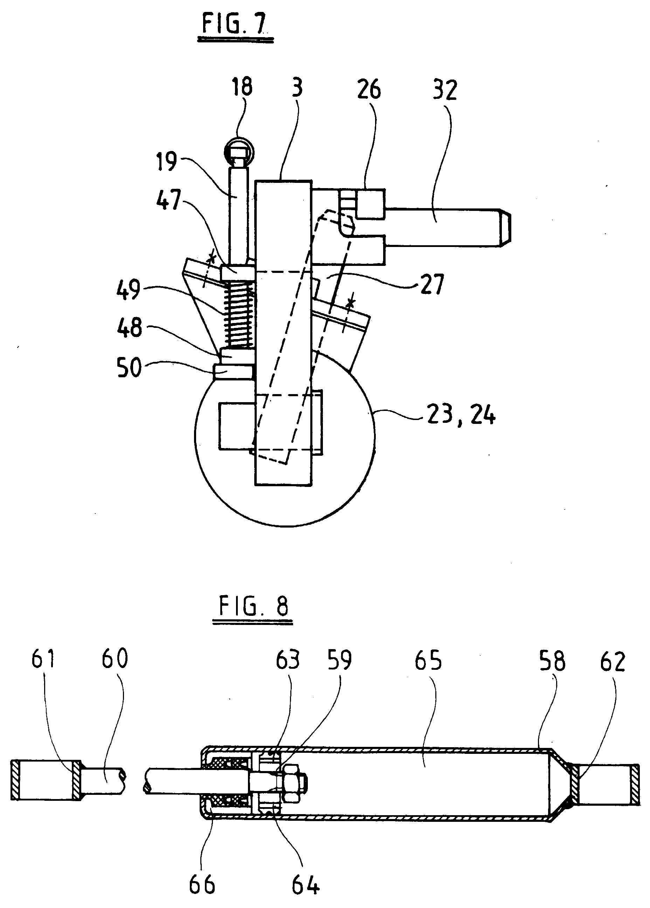

Der in Figur 8 im Längsschnitt dargestellte Dämpfer besteht aus einem Zylindergehäuse 58 und einem Kolben 59 mit einer Kolbenstange 60, wobei an der Kolbenstange 60 ein Lager 61 und am Zylindergehäuse 58 ein Lager 62 vorgesehen ist. In dem Kolben sind Längsbohrungen 63,64 vorgesehen, die den einen Zylinderraum 65 mit dem anderen Zylinderraum 66 verbinden.

### Bezugszeichenliste

- 1: Lastenheber
- 2: Lastenheber
- 3: Lenkkopf
- 4: Laufrolle
- 5: Laufrolle
- 6: (frei)
- 7: (frei)
- 8: Stützrolle
- 9: Laufrolle
- 10: Laufrolle
- 13: Verbindungslasche
- 14: Stift
- 15: Stift
- 16: Stift
- 17: Stift
- 18: Verbindungsstab
- 19: Entriegelungsstift
- 20: Entriegelungsstift
- 21: Bolzen
- 22: Bolzen
- 23: Lenkrad
- 24: Lenkrad
- 25: Schubstange
- 26: Schubkupplung
- 27: Stift
- 28: Last
- 29: Palette
- 30: Stützrolle
- 31: Boden
- 32: Adapterbolzen
- 33: (frei)
- 34: Aufnahmeträger
- 35: Querbolzen
- 36: Querbolzen
- 37: Schwenkhebel
- 38: Schwenkhebel
- 39: Querbolzen
- 40: Querbolzen
- 41: Parallelogrammführungsstange
- 42: Rollengabel
- 43: Rollengabel
- 44: Sicherungsklinke
- 44a: Position
- 45: Querbolzen
- 46: Sicherungsanschlag
- 47: Führungsbock
- 48: Führungsbock
- 49: Rückstellfeder
- 50: Entriegelungsnase
- 54: Öldruckzylinder
- 55: Kolbenstange
- 56: Lager
- 57: Bereich
- 58: Zylindergehäuse
- 59: Kolben
- 60: Kolbenstange
- 61: Lager
- 62: Lager
- 63: Längsbohrung
- 64: Längsbohrung
- 65: Zylinderraum
- 66: Zylinderraum

## Patentansprüche

1. Gabelhubwagen mit zwei gleichen Lasthebern in einer gemeinsamen Horizontalebene parallel zueinander zum Heben, Fahren und Absenken von Paletten, wobei jeder Lastenheber einen horizontal angeordneten Aufnahmeträger aufweist, in dessen hinterem Bereich und an dessen vorderem Ende je ein mit dem Aufnahmeträger schwenkbeweglich verbundener Schwenkhebel vorgesehen ist, wobei desweiteren die beiden Schwenkhebel mit Abstand unterhalb des Aufnahmeträgers mit einer Parallelogrammführungsstange gelenkig verbunden und im unteren Bereich des hinteren Schwenkhebels zwei Laufrollen angeordnet sowie an den vorderen Schwenkhebeln zwei Betätigungseinrichtungen zur Vertikalverschwenkung der Schwenkhebel vorgesehen sind und auf den beiden Betätigungsvorrichtungen ein Lenkkopf mit zwei Lenkrädern aufgesetzt und gegen Herausfallen gesichert ist, wobei darüber hinaus der Lenkkopf eine etwa mittig am Lenkkopf angeordnete Zug- und Schubkupplung und eine seitlich am Lenkkopf in der Projektion etwa senkrecht zu der Zug- und Schubkupplung angeordnete Drehkupplung aufweist und eine Betätigungsstange vorgesehen ist und wobei schließlich zwischen dem Aufnahmeträger und der Parallelogrammführungsstange ein einseitig wirkendes Schubkolbengetriebe schrägliegend angeordnet ist,
**dadurch gekennzeichnet**
daß das Schubkolbengetriebe als ein solcher einseitig wirkender Dämpfer ausgebildet ist, der nur beim Absenken des Gabelhubwagens eine Dämpfungskraft entwickelt, nicht hingegen beim Anheben des Gabelhubwagens.

2. Gabelhubwagen nach Anspruch 1, dadurch gekennzeichnet, daß der Dämpfer als hydraulischer Dämpfungszylinder ausgebildet ist.

3. Gabelhubwagen nach Anspruch 1 oder 2, dadurch gekennzeichnet, daß im Kolben des Dämpfungszylinders Längsbohrungen (63,64) vorgesehen sind.

4. Gabelhubwagen nach einem der vorhergehenden Ansprüche, dadurch gekennzeichnet, daß in den Bohrungen (63,64) oder in einem Teil der Bohrungen (63,64) des Kolbens Kugeln (59) vorgesehen sind, die beim Ausfahren der Kolbenstange (60) die Bohrungen (63,64) freigeben und diese Bohrungen (63,64) beim Einfahren der Kolbenstange (60) verschließen.
